# EUROPEAN PATENT SPECIFICATION

(11) **EP 2 341 413 B1**
(45) Date of publication and mention of the grant of the patent: **16.11.2016**
(21) Application number: 09252943.7
(22) Date of filing: 31.12.2009
(51) Int. Cl.: G06F 3/0488, G06F 3/0484, G06F 3/0485, G06F 1/16, G06F 3/0354

(54) **Entertainment device and method of content navigation**
Tragbares elektronisches Gerät und Verfahren zur Steuerung eines tragbaren elektronischen Geräts
Dispositif électronique portable et procédé de contrôle de ce dispositif

(43) Date of publication of application: 06.07.2011
(73) Proprietor: Sony Computer Entertainment Europe Limited, London W1F 7LP (GB)
(72) Inventor: Lee, Richard, London, W1F 7LP (GB); Coates, Sam, London, W1F 7LP (GB); Grenfell, Paul, Dartford, Kent DA9 9XB (GB)
(74) Representative: D Young & Co LLP

(56) References cited:
- EP-A1- 1 942 401
- JP-A- 2005 234 291
- US-A- 6 121 960
- US-A1- 2002 036 618
- US-A1- 2003 234 768
- US-A1- 2008 165 140
- REKIMOTO J ED - TERVEEN L ET AL: "SMARTSKIN: AN INFRASTRUCTURE FOR FREEHAND MANIPULATION ON INTERACTIVE SURFACES" CHI 2002 CONFERENCE PROCEEDINGS. CONFERENCE ON HUMAN FACTORS IN COMPUTING SYSTEMS. MINNEAPOLIS, MN, APRIL 20 - 25, 2002; [CHI CONFERENCE PROCEEDINGS. HUMAN FACTORS IN COMPUTING SYSTEMS], NEW YORK, NY : ACM, US LNKD- DOI:10.1145/503376.503397, 20 April 2002 (2002-04-20), pages 113-120, XP001099406 ISBN: 978-1-58113-453-7
- Wikipedia: "Scrollbar" 12 December 2007 (2007-12-12), XP002582940 Retrieved from the Internet: URL:http://web.archive.org/web/20071212184 722/http://en.wikipedia.org/wiki/Scrollbar > [retrieved on 2010-05-19]
- Charles Petzold: "Programming Windows - 5th ed." 1999, Microsoft Press , Redmond, Washington , XP002582941 ISBN: 157231995X * page 108, line 24 - page 109, line 7 *
- DANIEL WIGDOR, CLIFTON FORLINES, PATRICK BAUDISCH, JOHN BARNWELL, CHIA SHEN: "Lucid touch: a see-through mobile device" PROCEEDINGS OF THE 20TH ANNUAL ACM SYMPOSIUM ON USER INTERFACE SOFTWARE AND TECHNOLOGY, 7 October 2007 (2007-10-07), - 10 October 2007 (2007-10-10) pages 269-278, XP002582051 Newport, Rhode Island, USA DOI: 10.1145/1294211.1294259 ISBN: 978-1-59593-679-2

## Description

The present invention relates to an entertainment device and a method of content navigation.

Several current portable entertainment devices are capable of playing multimedia files, such as MP4 encoded movies. To control playback of such files, these devices provide a touch-sensitive surface that overlays the screen, allowing the user to interact with a graphical user control interface by the use of touch.

On such a device a user might scroll forwards and backwards through a media file by dragging their finger to the right or left across the screen, with the scroll action persisting for the duration of motion of the user's finger or, alternatively, having a notional momentum that causes the scroll action to persist after the user's finger has left the screen before slowing to a halt.

However, on small screens such as those found on the above portable devices, the available room for finger movement is small; for example about 5 to 10 centimetres. Therefore to navigate within a large document such as for example a long movie, the necessarily small finger movement must correspond to a high scroll speed, making it difficult for the user to accurately navigate within the film. To address this problem, potentially one may interpret the user's finger movement as corresponding to a smaller scroll speed, making navigation within the film more accurate but slow and requiring several strokes of the device to reach a desired playback position. Another alternative is to make the scroll speed non-linear with respect to the user's finger movement (e.g. in terms of extent and/or speed of finger movement), but this may be non-intuitive for many users. Thus there is a problem with how to navigate accurately though large documents on small touch-interface devices.

EP 1942401 and US 6121960 disclose techniques for touchscreen navigation.

In a first aspect, an entertainment device comprises a touch sensitive surface operable to detect two or more points of touch; and a navigation function means operable to change which part of the document represents a current document position for output by the device; in which positions in at least a portion of the document are mapped along a first axis of the touch sensitive surface, the navigation function comprises locating a position in the document corresponding to a position of a touch based gesture mapped along the first axis of the touch sensitive surface, and the entertainment device is arranged in operation to detect both the touch-based gesture used to control the navigation function means and the number of points of touch used in that gesture, and is arranged in operation to select a scaling of the navigation function responsive to the detected number of points of touch in use in the touch based gesture so that the amount of the document mapped along the first axis of the touch sensitive surface is responsive to the detected number of points of touch in use in the touch based gesture.

In another aspect, a method of content navigation for an entertainment device comprising a touch sensitive surface operable to detect two or more points of touch, comprises the steps of: detecting a touch-based gesture used to control a navigation function, wherein the navigation function is operable to change which part of the document represents a current document position for output; detecting the number of points of touch used in the gesture; mapping a scalar index (510) of a portion of the document along a first axis of the touch sensitive surface; and selecting a scaling of the navigation function responsive to the detected number of points of touch, wherein the navigation function comprises locating a position in the document corresponding to a position of a touch based gesture on the scalar index mapped to the touch sensitive surface; and the selecting step comprises selecting a proportion of the document mapped along the first axis of the touch sensitive surface in response to the detected number of points of touch in use in the touch based gesture.

Advantageously, the above aspects allow both rapid and accurate navigation of a large document using essentially the same input mechanism and gestures, because the scaling of navigation used through the document (e.g. the speed of a shuttle operation, the extent of a scroll operation or the proportion of a document represented by a selection position) is responsive to the number of fingers used in the gesture that controls the navigation.

Further respective aspects and features of the invention are defined in the appended claims.

Embodiments of the present invention will now be described by way of example with reference to the accompanying drawings, in which:
Figures 1A and 1B are schematic diagrams of an entertainment device in accordance with an embodiment of the invention.
Figure 2 is a schematic diagram of an entertainment device in accordance with an embodiment of the invention.
Figure 3 is a schematic diagram of an entertainment device in accordance with an embodiment of the invention.
Figures 4A to 4C are schematic diagrams illustrating use of an entertainment device in accordance with an embodiment of the invention.
Figures 5A to 5C are schematic diagrams illustrating use of an entertainment device in accordance with an embodiment of the invention.
Figure 6 is a schematic diagram illustrating use of an entertainment device in accordance with an embodiment of the invention.
Figure 7 is a flowchart outlining a method of content navigation in accordance with an embodiment of the invention.

An entertainment device and a method of content navigation are disclosed. In the following description, a number of specific details are presented in order to provide a thorough understanding of the embodiments of the present invention. It will be apparent, however, to a person skilled in the art that these specific details need not be employed to practise the present invention. Conversely, specific details known to the person skilled in the art are omitted for the purposes of clarity where appropriate.

In an example embodiment of the present invention an entertainment device has a display for viewing audio-visual documents such as movies, and a touch-sensitive surface that supports a so-called 'multi-touch' capability in which two or more points of contact with the touch sensitive surface (e.g. two or more fingers) can be independently detected.

Moving a first finger across the touch sensitive surface results in navigation through a movie at a first shuttle speed. Moving two fingers together results in navigation through for example a movie at a second, faster shuttle speed. Subsequent additional fingers (to the extent that the touch surface can process or fit such additional fingers) result in navigation at respectively faster shuttle speeds.

Thus, for example, a user could rapidly shuttle through 20 minutes of a film using a small movement δ of three fingers, then less rapidly shuttle through 2 minutes of film using a small movement δ of two fingers, and then slowly shuttle through 15 seconds of film using one finger and a similar small movement δ to reach their precise point of interest. In this way the trade-off between speed of navigation and precision (in terms of accurately commanding the device to resume playback at a desired position) can be overcome using an elegantly simple variant on a command. A similar approach can be used to navigate audio files, text documents or even game landscapes.

In embodiments of the present invention a suitable entertainment device is referred to as a portable electronic device, or 'PED'.

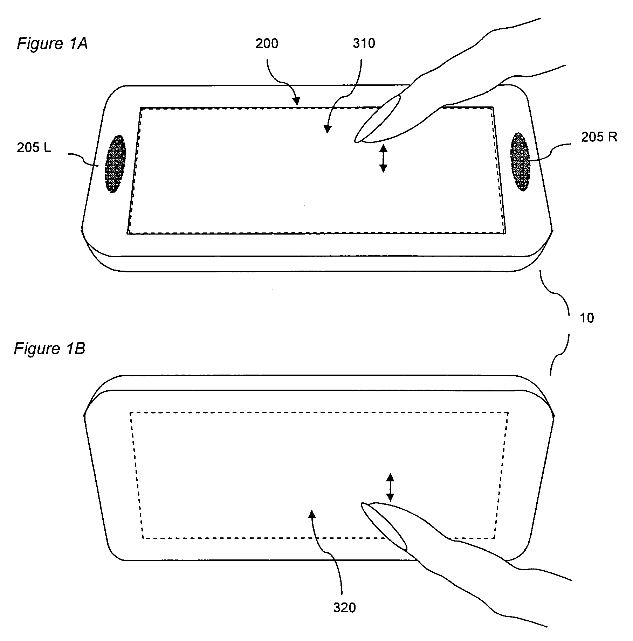

Figures 1A and 1B illustrate an embodiment of a PED 10. Figure 1A shows a notional front or top side or face of the PED, whilst Figure 1B shows a notional rear or bottom side of the PED. The front and rear sides are substantially parallel to each other.

On the front side, the PED comprises a display 200 and optionally one or more loudspeakers 205L, 205R.

On the rear side, the PED comprises a rear touch sensitive surface 320 (indicated by the dotted lines) having similar dimensions to the display 200. The rear touch sensitive surface is positioned so as to be substantially aligned with the display. That is to say, considered in a direction normal to the plane of the display, the rear touch sensitive surface substantially overlies the display.

Optionally, a transparent front touch sensitive surface 310 (indicated by the dotted lines in Figure 1A) is also provided coincident with the display 200. The front and rear touch sensitive surfaces and the display thus have similar dimensions and placements on their respective sides of the device. The touch sensitive surfaces also have a similar resolution of touch localisation.

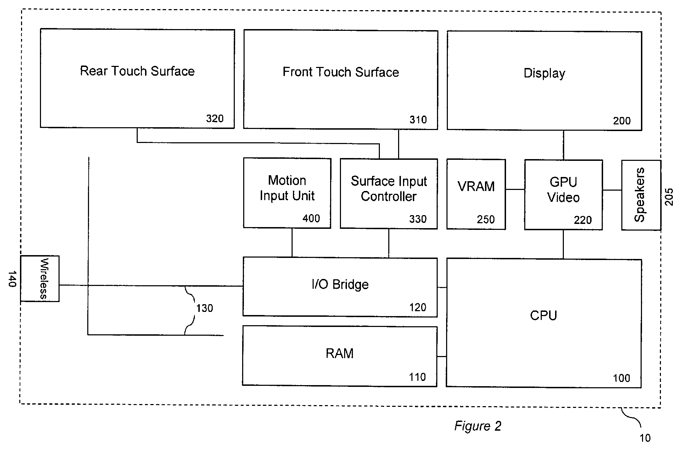

Referring now to Figure 2, an embodiment of the PED comprises a central processor (CPU) 100 coupled to random access memory (RAM) 110, and optionally to a read only memory (not shown). In addition the CPU communicates with a graphics processing unit (GPU) 220. The GPU has access to video RAM (VRAM) 250. The GPU outputs audio to loudspeakers 205L,R (only one shown for clarity) and/or to a headphone jack socket (not shown). The GPU also outputs video information to the display 200. The display is typically a liquid crystal display (LCD) but may be an organic light emitting diode display (OLED) or similar suitable display technology.

In addition, the CPU communicates with an input / output bridge (I/O bridge) 120 that co-ordinates communication with peripheral components both integral to and linkable with the PED. In an embodiment of the PED the I/O bridge communicates with a surface input controller 330, which parses inputs from the rear touch sensitive surface 320 and optionally the transparent front touch sensitive surface 310. The I/O bridge also communicates with an optional motion input unit 400 comprising one or more micro electromechanical (MEMs) accelerometers and/or gyroscopes, to provide up to six axes of motion input (x, y and z axis lateral movement and roll, pitch and yaw rotational movement). The I/O bridge also communicates with a bus 130, upon which various peripheral devices may be linked, including one or more wireless communication units 140, such as for example WiFi and / or Bluetooth ® communication units.

It will be appreciated that the CPU 100 may be a single core or multi core processor. Similarly, the RAM may be dynamic RAM or may comprise both dynamic RAM and static (e.g. flash) RAM units. Likewise, whilst the GPU typically uses dedicated VRAM, alternatively or in addition it may share common RAM with the CPU. Finally, it will be appreciated that the function of the surface input controller 330 may be performed by the CPU itself.

The rear touch sensitive surface may be a conventional capacitance touchpad or panel such as that found in laptop computers or portable telephones. Such a touchpad typically comprises two layers of parallel conductive lines separated by an insulator and arranged at right angles to one another. A high frequency signal is swept through every respective pairing of lines between the two layers. The measurable current for each pair is then proportional to the capacitance at their point of intersection. When a user's finger is placed at or near that intersection, however, some of the electrical field between layers is shunted to ground, changing the effective capacitance and hence the measured current. Precise localisation of the user's finger can be achieved by measuring changes in capacitance at nearby points of intersection, which will be proportional to their respective distances from the finger. So-called multi-touch operation of the touchpad can be achieved by detecting distinct peaks in capacitance change at separate intersection points on the pad. Meanwhile, movement of a user's finger or fingers can be estimated from successive points of intersection where contact is detected.

A front touch sensitive surface for use with the display operates in a similar manner to the rear touch sensitive surface, but in this instance the conductive lines are typically transparent (as a non limiting example, being formed by a deposition of indium tin oxide), and the insulator between two layers is provided by all or part of the display window (e.g. a glass layer); typically a further transparent protective layer is then provided on top of the upper conductive layer.

It will be appreciated however that any suitable touch sensitive technique may be used for either touch panel. The one or both touch panels are operable to detect two or more simultaneous points of touch.

It will also be appreciated that whilst not shown in the figures for the purposes of clarity, the PED comprises power distribution lines to various components and one or more sources of power, such as an input socket (for example a conventional DC power socket, or alternatively or in addition a USB socket). Such an input socket may also be used to charge one or more batteries (also not shown). Such batteries may be user removable or may be sealed in the device. Other components not shown include, for example, an optional microphone.

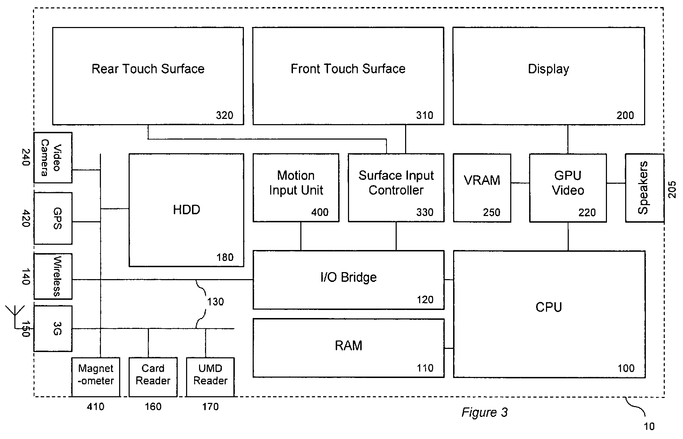

Referring now also to Figure 3, an embodiment of the PED may comprise one or more additional components, either integrated within the device or connectable to it. The additional components include, but are not limited to, the following.
a) A card reader 160 suitable for reading from and optionally writing to memory cards, such as a Sony ® Memory Stick ® card, or alternatively legacy memory cards such as those used by the Sony ® Playstation 2 ® entertainment device. Such a reader may be integral to the PED or may connect to the bus 130 via a USB connection.
b) A universal media disk (UMD) reader 170 or other optical disk reader (such as a DVD or Blu-Ray® disk reader), for accessing media and/or game content stored thereon. Such a reader may be removably connectable to the bus 130 via a USB or proprietary connection.
c) A magnetometer 410 for determining compass direction (i.e. the current absolute orientation of the PED), mounted integral to the PED either on the bus 130 or as part of the motion input unit 400.
d) A third generation (3G) or other mobile telephony module 150. in an embodiment, the module and aerial are integral to the PED, and optionally the aerial is shared with or otherwise coupled electromagnetically with other wireless units in the device for the purpose of transmission and reception. Alternatively the module may be removably connectable to the PED, for example via USB port or a Personal Computer Memory Card International Association (PCMCIA) slot.
e) A hard disk drive (HDD) 180 integral to the PED, providing bulk storage for audio / video media, downloaded games, and the like.
f) A GPS receiver 420. Again the GPS receiver may share an aerial with one or more other wireless units (such as WiFi) within the PED or may use its own aerial. Map information, where used, may be stored locally at the receiver, or in flash RAM of the PED, or on an HDD of the PED.
g) A video camera 240, typically comprising a charge coupled device (CCD) optical sensor and suitable optics for imaging onto the CCD. The resolution of the CCD may for example be 640x480 pixels, but may be any suitable resolution, such as for example 1920x1080 pixels (full HD). In an embodiment the video camera is integral to the PED, but alternatively may be removably connectable to the bus 130 via a USB or proprietary connection. An embodiment of the PED comprises two such video cameras 240, forming a stereoscopic pair.

In operation, the CPU accesses an operating system that is resident for example on a ROM, flash RAM or a hard disk. The operating system co-ordinates operation of the various functions of the PED and presents a user interface to a user of the device. The user interface will typically comprise graphical outputs via the display and touch based inputs, but may also include audio outputs and/or motion-based inputs.

The touch based inputs to the PED are peculiar to the arrangement of a display on the front of the PED and a correspondingly positioned touch sensitive surface (or 'panel') on the rear of the PED. This allows the user to treat the rear panel as a proxy for the display (in other words, address actions and inputs to the rear touch panel as if to the display, and/or point to the rear panel in order to point to the display). Thus for example, the user can point to icons or other displayed features from apparently underneath the display by touching the rear touch panel at the corresponding position.

It will be appreciated that unlike a laptop touch panel, the rear touch panel has a substantially 1:1 scale relationship with the screen, thereby not just enabling motion of a mouse pointer on screen that corresponds to motion of touch on the panel (for example), but furthermore also enabling direct placement of such a mouse on the screen at the position corresponding to the touch on the panel, because as noted above the panel can be understood to represent the screen (i.e. act as a proxy).

Because of the relative orientation of the display and the rear touch panel, left-to-right mapping across the rear touch panel is therefore reversed to correspond to the appropriate position on the display. Optionally this reversal is switchable depending on the orientation of the device as detected by the motion input unit, and/or according to what peripheral devices are connected; for example if the PED were connected to a television and then held display-down for use, the left-to-right mapping of the touch panel input may not be reversed.

Use of the rear touch panel as a proxy for the display advantageously allows interaction with the graphical output of the device without the user's hand or fingers obscuring the display or marking the display window. This is of particular benefit when the user wishes to navigate through an audio-visual document like a movie.

In addition, the subjective experience of controlling the displayed interface from behind or underneath the screen allows for new modes of user interaction; for example selection, highlighting or magnification of a screen element may be achieved by a user pushing the element 'toward' them (i.e. with finger pressure on the rear panel) from behind the device. For a capacitance based touch panel, an increase in pressure on the rear panel (i.e. a push) can be detected by a flattening of the user's finger, which results in a larger covered area and hence more points of intersection in the panel having reduced capacitance. Conversely a reduction in pressure reduces the number of intersection points where touch is detected.

In conjunction with a similar but transparent front touch sensitive surface overlaid on the display, further modes of interaction become possible. For example, objects may be selected by being pinched between thumb and forefinger, with the thumb and forefinger touching the front and back touch panels respectively. The object may then be moved around, and, for example, activated by using a squeezing action between thumb and forefinger.

Further modes of interaction rely on the correspondence between position and / or motion of the user's fingers on the two touch panels. For example in a video playback application, stroking a finger across only the top touch panel may be interpreted as a fast-forward or rewind command (depending on direction), whilst a pinch hold followed by corresponding movement left or right of both fingers may be interpreted as selection of a specific point in playback (i.e. where the total playback time is scaled to the width of the touch panels). By contrast, however, a pinch hold followed by both fingers moving in opposite directions to each other may be interpreted as a twisting action, and adjusts a virtual volume dial. A similar grammar of interaction could be used for example for document or e-book navigation, with scrolling, page selection and zoom replacing the above playback functions.

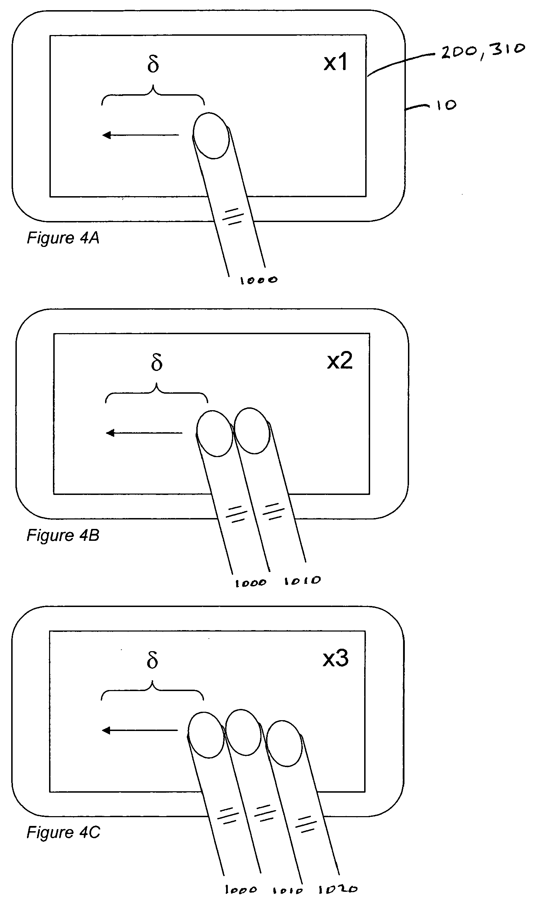

Referring now to Figures 4A to 4C, in an embodiment of the present invention, the PED displays an audio-visual document. The document may be static, such as a text document where progress through the document is wholly user-driver; or it may be dynamic, such as a movie where progress though the document is automatic, having a default speed. The term "document" is used in a generic way to encompass a machine-readable file having text material, audio material and/or visual material which cannot all be displayed or output at the same time in a useful (e.g. readable) manner, and through which a user may wish to navigate. Further examples include a game environment and a map. The display is arranged to display a part (e.g. a current page, current video frame or the like) of the document. More generally, the device is arranged to output a current part of the document, which could (in the case of an audio or audio/video document) mean outputting sound relating to a current position in the document. The general form of navigation is to change which part of the document represents a current position within the document for output (e.g. the page, text or frame for display on the display 200) by the device.

There are several ways that a user may potentially move or navigate through such documents.

Firstly, scrolling is a non-persistent movement through a document in response to a scroll input. For example, moving a finger across a touch panel may result in a corresponding movement through the document, often proportional to the extent of movement of the finger, and which stops when the user's finger stops (or optionally, slows to a halt based on a momentum effect).

Secondly, shuttling is a persistent movement through a document in response to a shuttle input. For example, moving a finger across a touch panel may initiate movement though the document that continues until a further input stops it (for example releasing the finger, or making a further explicit input). The extent of movement of the finger from a starting position can be related to the shuttle speed, and the direction of movement (or, for example, a horizontal component of the direction) from a starting position can be related to the direction of shuttle. So, for example, a small movement from a starting position to the right may cause a forward shuttle through a movie (i.e. towards the end of the movie) to occur at default speed x 1.5. A further movement, without releasing the finger in the meantime, could increase the shuttle speed to default speed x 3. Again a momentum effect can be applied so that gradual rather than abrupt stopping takes place in response to the further input.

Thirdly, cueing is a mechanism whereby an input to the device is mapped to a position in the document. Thus for example the width of the touch panel could represent the length of a movie, and the position at which the user touches the panel then corresponds to the position within the movie to which the device jumps.

These modes of navigation are discussed in the present application. All three may be touch-operated in the present embodiments.

In an embodiment of the present invention as illustrated in Figure 4A, moving one finger 1000 across a touch panel is interpreted by the CPU 100 (acting as a navigation function arrangement in cooperation with the touch sensitive surface(s) and the surface input controller 330) as a command to increase the speed of automatic progress through the document (i.e. shuttle through the document), with the direction of movement of the finger indicating the desired direction of progress. For a static document, this may also cause (or require) automatic progress to be initiated. The result is to change the part of the document which represents a current document position for output (e.g. display) by the device.

As noted previously, when the finger is removed from the touch panel, the automatic progress may immediately revert to its original rate (either a default speed or off, depending on the nature of the document), or may slow down to that original rate over a period of time responsive to a virtual momentum given to the document. However, this latter option can make precise navigation more difficult and so may be application dependent (for example it may be acceptable when navigating a globe map, for which a user may have an expectation of momentum).

As shown in Figure 4B, moving two fingers 1000, 1010 across the touch panel is interpreted as a command to increase the speed of shuttle through the document at a rate greater than that when one finger is used. The orientation and spacing of the fingers relative to each other need not have any significance to this interpretation (or may have a significance relevant to a further operation of the device beyond the remit of this application). However it will be appreciated that the fingers will typically move in roughly the same direction. Indeed, in an embodiment of the present invention, two or more fingers are interpreted as relating to the same input gesture depending on whether they demonstrate similar movement, for example within a threshold tolerance for direction of movement.

The motion of two fingers may be averaged, or alternatively once two fingers are detected, then for applications where only left/right or up/down motion is interpreted (e.g. for shuttling through a movie or scrolling through a document) then the finger whose motion is more closely horizontal or vertical (as applicable) is tracked for the purposes of control, so that the user can more easily correlate their inputs to the results on screen. In an alternative, the touch movement is derived from the change in position of the leading finger in the detected direction of movement (e.g. the right-most finger in the case of detected left to right motion).

Optionally, a degree of hysteresis may be provided, so that if detection of one finger is momentarily lost by the touchpad, the device continues to operate as if there are two fingers. After a threshold period (for example 0.1 seconds) the finger is assumed to be deliberately withdrawn and the device reverts to operating as if there is one finger.

If hysteresis is provided as described above, then optionally it is not used when there is only initially one finger, on order to provide the most precise and responsive operation of the device. Similarly when using two fingers, if detection of both fingers is lost then this may also be immediately interpreted as a deliberate withdrawal of the fingers.

As shown in Figure 4C, moving three fingers 1000, 1010, 1020 across a touch panel is interpreted as a command to increase the speed of shuttling through the document at a speed yet greater than when two fingers are used. Otherwise, operation is similar to the above described case of using two fingers.

It will be appreciated that four fingers would result in yet faster navigation through the document, and so on.

It will be appreciated that the increase in speed may be a linear scaling function selected by the CPU 100 in response to the number of fingers used, so that one finger (moved by a certain distance) results in a speed *N* shuttle action, two fingers causes a 2N speed action and three fingers gives a 3N speed action. Accordingly, the navigation function (in this case, shuttle) is scaled according to the number of fingers in use. However, alternatively the scaling relationship may be non linear, so that for example one finger gives speed *N',* two fingers gives speed 4*N'* and three fingers gives speed 12*N'*.

The shuttle speed can be independent of the *extent* of finger movement. So, for example, the mere fact that two fingers have been moved from left to right could give rise to shuttle at (say) four times the default speed through the current document, however far those fingers are moved. Alternatively, a relationship is established between the extent of movement of a finger and the resulting shuttle speed. For example, each centimetre of movement of a single finger from a starting position could increase the speed of progress through a movie by a change equal to the default speed. In other words, one finger moved by 1cm would give a 2x default speed, one finger moved by 3cm would give a 4x default speed shuttle, and so on. In such a case, whatever relationship is established for one finger is multiplied by the factors set out in the preceding paragraph in the case that two, three or four fingers are used. So, for example, moving two fingers by 1cm would give a 4x default speed shuttle, and moving two fingers by 3cm would give an 8x default speed shuttle.

Thus more generally, the speed of the shuttle function is mapped to, i.e. scaled in response to, the number of fingers used to direct the navigation. The navigation itself is controlled by the CPU which selects a scaling of the navigation function according to the number of detected simultaneous touches.

It will be appreciated that the principles outlined above for shuttling also apply to scrolling a document. In this case, it is the amount or extent of the scroll that is scaled in accordance to the number of fingers used.

Thus for example in a text document, moving one finger once down the full vertical extent of the touch panel may correspond to scrolling through one page of the document, whilst moving two fingers once down the full vertical extent of the touch panel corresponds to scrolling through two pages of the document, and so on. Again, the mapping between the number of fingers and the extent of scroll may be non-linear.

Thus more generally still, a multiplier of a parameter controlling a navigation function is scaled according to the number of fingers used to direct the navigation.

In an embodiment of the present invention, the use of one or more fingers causes different types of automatic progress through a document. For example the use of one finger may result in shuttling through a document in the manner described previously, whilst the use of two fingers results in a chapter skip through the document - for example, being instigated by a flick (sudden movement with return) of the fingers to one side or the other. As before, the direction of finger motion determines the direction of chapter skip.

It will be appreciated that the above two approaches may also be combined. For example, the use of one finger results in shuttling through a document at a speed N, whilst the use of two fingers results in shuttling through the document at a speed that is a multiple *of N;* however, the use of three fingers results in chapter skipping (considered to be a faster still navigation technique for moving through the document).

Again it will therefore be appreciated that the speed of navigation through the document is responsive to the number of fingers used to direct the navigation, but in this case, where the speed would become so fast that one mode of navigation is no longer appropriate (e.g. fast forward and rewind shuttling) then another can be used instead (e.g. chapter skipping).

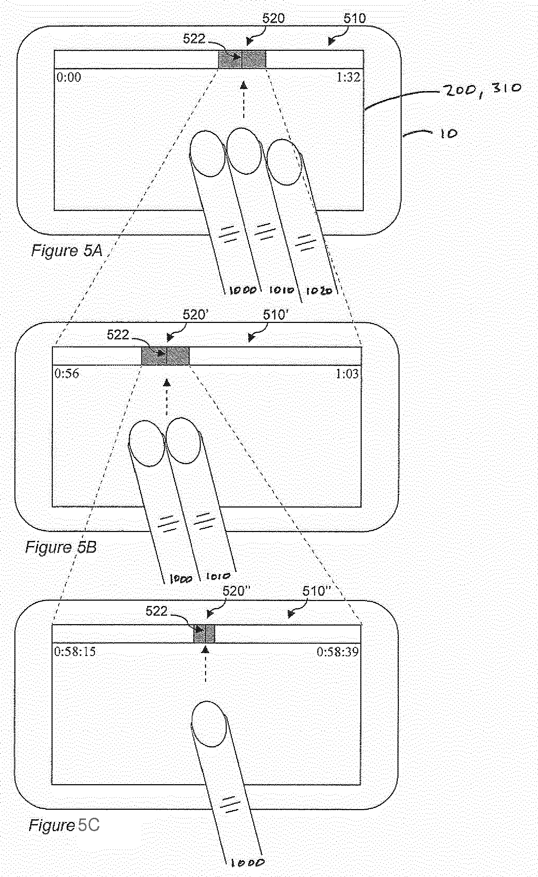

Referring now to Figures 5A to 5C, the above principles may also be applied to cueing.

For example, the duration or length of a document may be mapped along an axis of the touchpad (typically the longer axis, but optionally the axis consistent with conventional motion of the document, i.e. horizontal for video and vertical for text documents). Navigation to a point in the document then corresponds to a simple selection of a point along this control axis of the touchpad.

Using the previously established convention that multiple fingers are used for faster and/or coarser resolution navigation, then with reference to Figure 5A, three fingers (as a nonlimiting example) may be used to select a position along the horizontal axis of the touchpad, across which the full duration of the document (in the example, a 92 minute film) has been mapped, and thereby to locate a position in the document corresponding to that finger position. The average or central position of the three fingers along the axis is used to select the desired position. The desired position in the document may therefore be estimated (for example when the user stops touching the touchpad), but it will be appreciated that the resolution of time over the touchpad will be so coarse that a high level of precision (in terms of selecting a desired moment in the film) is not possible.

Therefore, having found an approximate position using three fingers, a more exact position may be identified using two fingers. Referring to Figure 5B, the use of two fingers scales a period of time (or, more generally, a proportion of the document smaller than that used when three fingers were applied) over the control axis of the touchpad, so that the resolution of time over the touchpad is much finer, enabling more accurate control. The period of time is typically centred on the position in the document at the moment when the two fingers were applied to the touchpad. Again, the user's desired position is determined by an average of the position of the two fingers along the control axis of the touchpad. Again, if the user stops touching the touchpad, a value for the desired position can be computed, and the accuracy of that selected position with respect to an intended position will be greater than was the case for three fingers.

Finally, referring to Figure 5C, the use of one finger results in a yet smaller period of time (or smaller percentage of the document) than that applicable when two or three fingers were used, being scaled across the control axis of the touchpad. The result is yet more precise control of the position in the document, coupled with (at least subjectively) the most accurate correspondence to the user input (i.e. just one finger). Again the time period is centred on the position in the document when the finger was initially applied to the touchpad.

So, from the user's point of view, the user can first locate an approximate position by selecting a cue function and then placing or sliding three fingers with respect to the control axis of the touch panel. When the user releases those three fingers and touches again with two (or simply lets go with one of the three fingers), not only does the current cue position in the document change to correspond to the centre of the touch position of the two fingers, but the relationship between that finger position and the resulting cue position also changes. A similar change occurs when the user next changes the number of fingers (up or down in number). It is therefore helpful if an on-screen indication is provided to indicate the current relationship in use.

It will be appreciated that rapid and precise navigation within the document can therefore be achieved by using three fingers to find an approximate position, before lifting one or two fingers to initiate a more refined positioning of the document from the approximate position. In other words, the navigation function is scaled, in terms of the extent or amount of the document which is mapped to the control axis of the display, in dependence on the number of fingers in use.

It is not necessary that the three-finger cue system maps the whole document to the control axis; this may be impractical in a very large document. However, the selection of the scaling is such that smaller and smaller proportions of the document are mapped to the control axis as fewer fingers are used.

Thus more generally the mapping of a scaling of navigation through the document is responsive to the number of fingers used to direct the navigation. Such a scaling can change shuttle speed, scroll extent or the amount of a document mapped across the touchpad, depending on the mode of navigation input being used.

The above cueing process can be assisted by providing visual indicators, such as a time bar 510 that displays the extent of the time currently mapped along the control axis (and for example, labelled by a start and end time), and a slider reticule 520 that indicates the desired position within the document. The reticule may be sized to reflect the accuracy of the estimated desired position (as shown in Figure 5C), or may be sized to reflect the region of the time axis that would be navigable using one finger fewer (as shown in Figures 5A and 5B). Optionally the reticule may display several pieces of information; for example, the current estimated desired position could be displayed as a line 522 (as seen in Figures 5A-C), with the reticule forming a highlighted region of the time bar around this position that corresponds to the extent of the next level time bar (i.e. with one fewer finger).

In addition, a key frame or thumbnail (i.e. a reduced size representation) of the document at the current estimated desired position may be displayed with the reticule, and may also be displayed at each end of the time bar, to assist with navigation. Alternatively the main display (i.e. the document display) can show key frames.

Again, it will be appreciated that optionally hysteresis can be applied to accommodate momentary loss of detection of one or more fingers as described previously.

Thus more generally, for modes of document navigation such as shuttling, scrolling and cueing, the PED interprets both the gesture used to control the navigation and the number of fingers used in that gesture, to determine a corresponding scaling to apply to the mode of navigation. The scaling is thus the granularity or degree by which the navigation mechanism resolves the document during navigation, either in terms of skipped frames during shuttling, or in terms scroll speed, or in terms of the number of frames represented by each sensor point along a control axis of the touch panel.

In embodiments of the present invention, either the rear touch panel or the front touch surface (if present) or both can be used in the manner described in the present application. The choice could be available to the user at each occasion that the user makes use of this functionality. Alternatively, only one of the surfaces operates in this manner, for example to enable the user to easily hold the device during normal use.

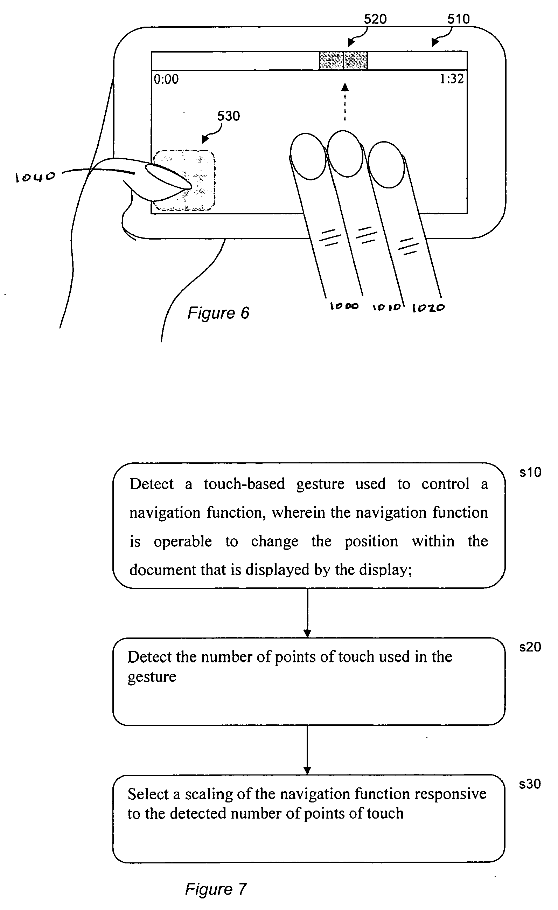

Alternatively, referring now to Figure 6, one of the touch surfaces (e.g. the rear surface) is only operable as described in the present application only when the user touches a particular area 530 of either the same touch surface or the opposite touch surface (for example the left or right lower corner of the front touch surface, which may be comfortably touched by a thumb 1040 whilst holding the device in one hand); this allows the user to indicate to the device when it should respond in the above described manner, whilst still holding the device in a natural way.

Finally, it will be appreciated that whilst the above description refers to the use of fingers, alternatively or in addition other means of interacting with a touch surface, such as a stylus, may also be used.

Referring now to Figure 7, for an entertainment device comprising a display for displaying a part of a document and a touch sensitive surface operable to detect two or more points of touch, a method of content navigation comprises:
in a first step s10, detecting a touch-based gesture used to control a navigation function, wherein the navigation function is operable to change the position within the document that is displayed by the display (or at least the part of a document representing a current document position for output);
in a second step s20, detecting the number of points of touch used in the gesture; and
in a third step s30, selecting a scaling of the navigation function responsive to the detected number of points of touch.

It will be apparent to a person skilled in the art that variations in the above method corresponding to operation of the various embodiments of the apparatus as described and claimed herein are considered within the scope of the present invention, including but not limited to:
i. the navigation function comprising a shuttle function, and the shuttle speed being responsive to the detected number of points of touch;
ii. the navigation function further comprising a chapter skip function, and transition from the shuttle to chapter skip being responsive to the detected number of points of touch;
iii. the navigation function comprising a scroll function, and the extent of scroll being responsive to the detected number of points of touch;
iv. mapping a scalar index of a portion of the document along an axis of the touch sensitive surface and locating a position in the document corresponding to a position on the scalar index mapped to the touch sensitive surface, where the proportion of the document mapped along the axis is responsive to the detected number of points of touch;
v. the display being on a first, front side of the entertainment device and the touch sensitive surface being on a second, rear side of the entertainment device substantially parallel to the front side;
vi. the touch sensitive surface having substantially the same dimensions and placement on the rear side of the entertainment device as the display has on the front side of the entertainment device, and then reversing the horizontal component of a touch-based gesture used to control the navigation function;
vii. The display also having a touch sensitive surface;
viii. and limiting the navigation function to operate only when a predetermined region of a touch sensitive surface of the entertainment device detects a point of touch; and where
ix. The document is one or more of an audio-visual media file, a text-based document, a map, and a game environment such as a landscape that can be scrolled through.

Finally, it will be appreciated that the methods disclosed above may be carried out on suitable hardware as described herein that is suitably adapted as applicable by software instruction.

Thus the required adaptation to existing parts of a suitable device may be implemented in the form of a computer program product or similar object of manufacture comprising processor implementable instructions stored on a data carrier such as a floppy disk, optical disk, hard disk, PROM, RAM, flash memory or any combination of these or other storage media, or transmitted via data signals on a network such as an Ethernet, a wireless network, the Internet, or any combination of these of other networks, or realised in hardware as an ASIC (application specific integrated circuit) or an FPGA (field programmable gate array) or other configurable circuit suitable to use in adapting the conventional equivalent device.

## Claims

1. An entertainment device (10), comprising
a display (200) operable to display graphical outputs corresponding to a user interface to navigate a document;
a touch sensitive surface (310) corresponding to the display (200) operable to detect two or more points of touch; and
a navigation function means (100) operable to change which part of a document represents a current document position for output by the device;
and in which
positions in at least a portion of the document are mapped along a first axis (510) of the touch sensitive surface;
the navigation function comprises locating the current position (520) in the document corresponding to a position of a touch based gesture mapped along the first axis of the touch sensitive surface;
**characterised in that** the entertainment device is arranged in operation to detect both the touch-based gesture position used to control the navigation function means and the number of points of touch used **in that** gesture to control which portion of the document is mapped along the first axis of the touch sensitive surface, and is arranged in operation to
change a scaling of the navigation function responsive to the detected number of points of touch in use in the touch based gesture so that the amount of the document mapped along the first axis of the touch sensitive surface is responsive to the detected number of points of touch in use in the touch based gesture.

2. An entertainment device according to claim 1, in which the navigation function means is operable to change which part of the document is displayed by the display.

3. An entertainment device according to any one of the preceding claims, in which:
the display is on a first, front side of the entertainment device; and
the touch sensitive surface is on a second, rear side of the entertainment device substantially parallel to the front side.

4. An entertainment device according to claim 3, in which:
the touch sensitive surface has substantially the same dimensions and placement on the rear side of the entertainment device as the display has on the front side of the entertainment device; and
the entertainment device is arranged in operation to reverse the horizontal component of a touch-based gesture as received by the touch sensitive surface used to control a navigation function.

5. An entertainment device according to any one of the preceding claims, in which the display comprises the touch sensitive surface.

6. An entertainment device according to any one of the preceding claims, in which the navigation function is operable only when a predetermined region of a touch sensitive surface of the entertainment device detects a point of touch.

7. An entertainment device according to any one of the preceding claims, in which the document is one or more selected from the list consisting of:
i. an audio-visual media file;
ii. a text-based document;
iii. a map; and
iv. a game environment.

8. A method of content navigation for an entertainment device (10) comprising a display (200) and a touch sensitive surface (310, 320) corresponding to the display and operable to detect two or more points of touch, the method comprising the steps of:
displaying graphical outputs corresponding to a user interface to navigate a document;
detecting a touch-based gesture used to control a navigation function, wherein the navigation function is operable to change which part of the document represents a current document position for output;
detecting the number of points of touch used in the gesture;
mapping a portion of the document along a first axis of the touch sensitive surface; and **characterised in that** it comprises the step of:
selecting a scaling of the navigation function responsive to the detected number of points of touch; wherein
the selecting step comprises selecting a portion of the document mapped along the first axis of the touch sensitive surface in response and in proportion to the detected number of points of touch in use in the touch based gesture; and
the navigation function comprises locating a position in the document portion corresponding to a position of a touch based gesture along the first axis of the touch sensitive surface.

9. A computer readable medium having computer executable instructions adapted to cause a computer system to perform the method of 8.

## Patentansprüche

1. Unterhaltungselektronikvorrichtung (10), umfassend eine Anzeige (200), die betreibbar ist, grafische Ausgaben anzuzeigen, die einer Benutzerschnittstelle entsprechen, um durch ein Dokument zu navigieren;
eine berührungsempfindliche Oberfläche (310), die der Anzeige (200) entspricht, die betreibbar ist, zwei oder mehr Berührpunkte zu detektieren; und
ein Navigationsfunktionsmittel (100), das betreibbar ist zum Ändern, welcher Teil eines Dokuments eine aktuelle Dokumentposition zur Ausgabe durch die Vorrichtung repräsentiert;
und in dem
Positionen in mindestens einem Teil des Dokuments entlang einer ersten Achse (510) der berührungsempfindlichen Oberfläche abgebildet sind;
die Navigationsfunktion das Orten der aktuellen Position (520) in dem Dokument umfasst, die einer Position einer berührungsbasierten Geste entspricht, die entlang der ersten Achse der berührungsempfindlichen Oberfläche abgebildet ist; **dadurch gekennzeichnet, dass**
die Unterhaltungselektronikvorrichtung im Betrieb dafür ausgelegt ist, sowohl die Position der berührungsbasierten Geste, die verwendet wird, um das Navigationsfunktionsmittel zu steuern, als auch die Anzahl von Berührpunkten, die in der Geste verwendet werden, um zu steuern, welcher Teil des Dokuments entlang der ersten Achse der berührungsempfindlichen Oberfläche abgebildet wird, zu detektieren, und ausgelegt ist zum
Ändern einer Skalierung der Navigationsfunktion als Reaktion auf die detektierte Anzahl von bei der berührungsbasierten Geste verwendeten Berührpunkten, so dass die Größe des Dokuments, das entlang der ersten Achse der berührungsempfindlichen Oberfläche abgebildet ist, auf die detektierte Anzahl von bei der berührungsbasierten Geste verwendeten Berührpunkten reagiert.

2. Unterhaltungselektronikvorrichtung nach Anspruch 1, in der das Navigationsfunktionsmittel betreibbar ist zum Ändern, welcher Teil des Dokuments von der Anzeige angezeigt wird.

3. Unterhaltungselektronikvorrichtung nach einem der vorhergehenden Ansprüche, in dem:
die Anzeige auf einer ersten bzw. Vorderseite der Unterhaltungselektronikvorrichtung befindlich ist; und die berührungsempfindliche Oberfläche auf einer zweiten bzw. Rückseite der Unterhaltungselektronikvorrichtung befindlich ist, die im Wesentlichen parallel zur Vorderseite ist.

4. Unterhaltungselektronikvorrichtung nach Anspruch 3, in der:
die berührungsempfindliche Oberfläche im Wesentlichen dieselben Dimensionen und Platzierung auf der Rückseite der Unterhaltungselektronikvorrichtung aufweist wie die Anzeige auf der Vorderseite der Unterhaltungselektronikvorrichtung; und
die Unterhaltungselektronikvorrichtung im Betrieb dafür ausgelegt ist, die Horizontalkomponente einer berührungsbasierten Geste umzukehren, wie sie von der berührungsempfindlichen Oberfläche empfangen wird, um eine Navigationsfunktion zu steuern.

5. Unterhaltungselektronikvorrichtung nach einem der vorhergehenden Ansprüche, in der die Anzeige die berührungsempfindliche Oberfläche umfasst.

6. Unterhaltungselektronikvorrichtung nach einem der vorhergehenden Ansprüche, in der die Navigationsfunktion nur betreibbar ist, wenn ein vorherbestimmter Bereich einer berührungsempfindlichen Oberfläche der Unterhaltungselektronikvorrichtung einen Berührpunkt detektiert.

7. Unterhaltungselektronikvorrichtung nach einem der vorhergehenden Ansprüche, in der das Dokument eins oder mehrere, ausgewählt aus der aus den Folgenden bestehenden Liste ist:
(i) eine audiovisuelle Mediendatei;
(ii) ein textbasiertes Dokument;
(iii) eine Landkarte; und
(iv) eine Spielumgebung.

8. Verfahren zur Inhaltsnavigation für eine Unterhaltungselektronikvorrichtung (10), umfassend eine Anzeige (200) und eine berührungsempfindliche Oberfläche (310, 320), die der Anzeige entspricht und betreibbar ist, zwei oder mehr Berührpunkte zu detektieren, wobei das Verfahren die folgenden Schritte umfasst des:
Anzeigens grafischer Ausgaben, die einer Benutzerschnittstelle entsprechen, um durch ein Dokument zu navigieren;
Detektierens einer berührungsbasierten Geste, die verwendet wird, eine Navigationsfunktion zu steuern,
wobei die Navigationsfunktion betreibbar ist zum Ändern, welcher Teil des Dokuments eine aktuelle Dokumentposition zur Ausgabe repräsentiert;
Detektierens der Anzahl von in der Geste verwendeten Berührpunkten;
Abbilden eines Teils des Dokuments entlang einer ersten Achse der berührungsempfindlichen Oberfläche;
und **dadurch gekennzeichnet, dass** es den folgenden Schritt umfasst des:
Auswählens einer Skalierung der Navigationsfunktion als Reaktion auf die detektierte Anzahl von Berührpunkten; wobei
der Auswahlschritt das Auswählen eines Teils des Dokuments umfasst, der entlang der ersten Achse der berührungsempfindlichen Oberfläche abgebildet ist, als Reaktion auf die und proportional zu der detektierte(n) Anzahl von in der berührungsbasierten Geste verwendeten Berührpunkten; und
die Navigationsfunktion das Orten einer Position in dem Dokumentteil umfasst, der einer Position einer berührungsbasierten Geste entlang der ersten Achse der berührungsempfindlichen Oberfläche entspricht.

9. Computerlesbares Medium mit computerausführbaren Anweisungen, die dafür ausgelegt sind, ein Computersystem zu veranlassen, das Verfahren nach Anspruch 8 durchzuführen.

## Revendications

1. Dispositif récréatif (10) comprenant :
- un affichage (200) permettant d'afficher des sorties graphiques correspondant à une interface d'utilisateur pour naviguer dans un document ;
- une surface tactile (310) correspondant à l'affichage (200) permettant de détecter deux points de toucher ou plus ; et
- un moyen de fonction de navigation (100) permettant de changer la partie d'un document qui représente une position de document courante en vue de l'émission par le dispositif ;
et dans lequel
- les positions dans au moins une partie du document sont cartographiées le long d'un premier axe (510) de la surface tactile ;
- la fonction de navigation comprend la localisation de la position courante (520) dans le document correspondant à une position d'un geste basé sur le toucher cartographié le long du premier axe de la surface tactile ;
**caractérisé en ce que** :
le dispositif récréatif est conçu en fonctionnement pour détecter la position du geste basé sur le toucher utilisée pour commander le moyen de fonction de navigation ainsi que le nombre de points de toucher utilisés dans ce geste pour commander quelle partie du document est cartographiée le long du premier axe de la surface tactile ; et est conçu en fonctionnement pour changer une mise à l'échelle de la fonction de navigation en réponse au nombre détecté de points de toucher lors de l'utilisation dans le geste basé sur le toucher de sorte que la quantité de document cartographiée le long du premier axe de la surface tactile soit en réponse au nombre détecté de points de toucher lors de l'utilisation dans le geste basé sur le toucher.

2. Dispositif récréatif selon la revendication 1, dans lequel le moyen de fonction de navigation permet de changer la partie du document qui est affichée par l'affichage.

3. Dispositif récréatif selon l'une quelconque des revendications précédentes, dans lequel :
- l'affichage se fait sur un premier côté avant du dispositif récréatif ; et
- la surface tactile se trouve sur un second côté arrière du dispositif récréatif essentiellement parallèle au côté avant.

4. Dispositif récréatif selon la revendication 3, dans lequel :
- la surface tactile possède essentiellement les mêmes dimensions et le même placement sur le côté arrière du dispositif récréatif que l'affichage sur le côté avant du dispositif récréatif ; et
- le dispositif récréatif est conçu en fonctionnement pour inverser la composante horizontale d'un geste basé sur le toucher tel que reçu par la surface tactile utilisée pour commander une fonction de navigation.

5. Dispositif récréatif selon l'une quelconque des revendications précédentes, dans lequel l'affichage comprend la surface tactile.

6. Dispositif récréatif selon l'une quelconque des revendications précédentes, dans lequel la fonction de navigation est fonctionnelle uniquement lorsqu'une région prédéterminée d'une surface tactile du dispositif récréatif détecte un point de toucher.

7. Dispositif récréatif selon l'une quelconque des revendications précédentes, dans lequel le document est un ou plusieurs des éléments choisis dans la liste comprenant :
i. un fichier média audiovisuel ;
ii. un document à base de texte ;
iii. une carte ; et
iv. un environnement de jeu.

8. Procédé de navigation dans un contenu pour un dispositif récréatif (10) comprenant un affichage (200) et une surface tactile (310, 320) correspondant à l'affichage et permettant de détecter deux points de toucher ou plus, lequel procédé comprend les étapes consistant à :
- afficher des sorties graphiques correspondant à une interface d'utilisateur pour naviguer dans un document ;
- détecter un geste basé sur le toucher utilisé pour commander une fonction de navigation, la fonction de navigation permettant de changer la partie du document qui représente une position de document courante en vue de l'émission ;
- détecter le nombre de points de toucher utilisés dans le geste ;
- cartographier une partie du document le long d'un premier axe de la surface tactile ; et
**caractérisé en ce qu'**il comprend l'étape consistant à :
- choisir une mise à l'échelle de la fonction de navigation en réponse au nombre détecté de points de toucher ; dans lequel
l'étape de sélection consiste à choisir une partie du document cartographié le long du premier axe de la surface tactile en réponse et en proportion au nombre détecté de points de toucher lors de l'utilisation dans le geste basé sur le toucher ; et
- la fonction de navigation comprend la localisation d'une position dans la partie de document correspondant à une position d'un geste basé sur le toucher le long du premier axe de la surface tactile.

9. Support lisible par ordinateur comprenant des instructions exécutables par ordinateur conçues pour qu'un système informatique effectue le procédé selon la revendication 8.
